# EUROPEAN PATENT APPLICATION

(11) **EP 3 460 291 A1**
(43) Date of publication of application: **27.03.2019**
(21) Application number: 18196094.9
(22) Date of filing: 21.09.2018
(51) Int. Cl.: F16H 21/14, F03G 3/00, F16H 33/08, F16H 21/34, F16J 7/00

(54) **ROTATING APPARATUS THAT CONVERTS PART OF THE CENTRIFUGAL FORCE INTO TORQUE**

(30) Priority: 21.09.2017 IT 201700106036
(71) Applicant: Attrezzeria Universal S.r.l., 46029 Suzzara (MN) (IT); Adami, Federico, 46027 San Benedetto Po (MN) (IT); Moretti, Curio, 42046 Reggiolo (RE) (IT); Zatelli, Achille, 46023 Gonzaga (MN) (IT); Lepore, Andrea, 46039 Villimpenta (MN) (IT); Moretti, Fabio Umberto, 42046 Reggiolo (RE) (IT); Carpi, Gianluca, 42046 Reggiolo (RE) (IT); Clidonio, Antonio, 42046 Reggiolo (RE) (IT)
(72) Inventor: ADAMI, Bruno, 46029 SUZZARA (MN) (IT)
(74) Representative: Fanzini, Valeriano

(57) **Abstract**

Rotating apparatus 100 comprising a motorized disc 1 adapted to be placed in rotation by a motor 3 and a driven disc 2 adapted to be placed in rotation by the motorized disc 1, where the driven disc 2 comprises a plurality of connecting rods 21 and each connecting rod 21 is operationally associated to a skid 12 sliding along a corresponding guide 11, where said guides 11 are mechanically associated to the motorized disc 1 and arranged radially at constant pitch from each other.

## Description

### FIELD OF APPLICATION OF THE INVENTION

The present invention relates to the field of devices for the transmission of motion and torque.

### PRIOR ART

A number of solutions are known for the transmission of the rotary motion and the torque that can be used in rotary machines.

Typically, the most widespread solutions provide for the use of a range of gears or other transmission components, which transmit motion from a motor to a driven system.

However, the known solutions are generally susceptible of being improved in terms of efficiency and performance.

### DISCLOSURE AND ADVANTAGES OF THE INVENTION

The technical problem underlying the present invention is to provide a rotating apparatus that converts part of the centrifugal force into torque, which is structurally and functionally devised to optimize the torque transmission performance.

Within the scope of the above-mentioned problem, a main object of the invention is to develop a device that allows, by virtue of the manner in which it is geometrically configured, transmitting to the output shaft a torque due to a component of the centrifugal force, which, as it is known, does not depend on the applied torque, but on the mass, the square of the peripheral velocity, and the radius of action.

A further object of the invention is also to provide the art with a rotating apparatus that converts part of the centrifugal force into torque within the scope of a simple, rational, and quite inexpensive solution.
In particular, the present invention provides a device that is able to receive power from a motor and to transmit it to a motorized disc, which puts a driven disc into rotation, by a plurality of connecting rods mechanically connected to the driven disc and each being operationally associated to a corresponding skid sliding on a guide, where said guides are integral to the motorized disc and arranged radially and at constant pitch from each other.

By virtue of this solution, there is an optimization in the transmission of the torque. In fact, as a result of the geometry of the device that is the subject matter of the invention, it is possible to define an arm on which a component of the centrifugal force which is generated during the rotation of the device works, so as to convert into torque a part of said centrifugal force.

A further advantage of this solution is that it makes possible to put the device in rotation by a motor having a minimum torque, i.e., the minimum torque necessary to rotate it, overcoming frictions.

Such and other objects are achieved by the features of the invention set forth in the independent claim 1. The dependent claims delineate preferred and/or particularly advantageous aspects of the invention.

Said objects and advantages are all achieved by the rotating apparatus that converts part of the centrifugal force into torque, which is the subject matter of the present invention, which is characterized by what is provided for in the claims set forth herein below.

### BRIEF DESCRIPTION OF THE FIGURES

This and other features will be more clearly understood from the following description of some embodiments illustrated, by way of non-limiting example, in the attached drawing figures.
- Fig. 1: illustrates an axonometric view of a rotating apparatus according to the present invention.
- Fig. 2: illustrates an exploded view of said rotating apparatus.
- Fig. 3: illustrates a top view of said rotating apparatus.
- Fig. 4: illustrates a sectional side view of the rotating apparatus

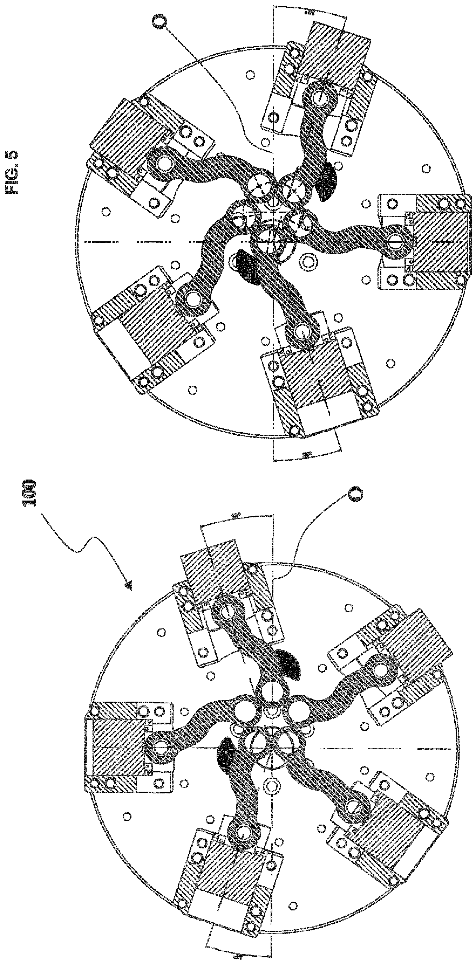

- Fig. 5: illustrates a side view of the rotating apparatus in which the positions where the phaser teeth come into contact/detach from the connecting rods are pointed out.

### DESCRIPTION OF THE INVENTION

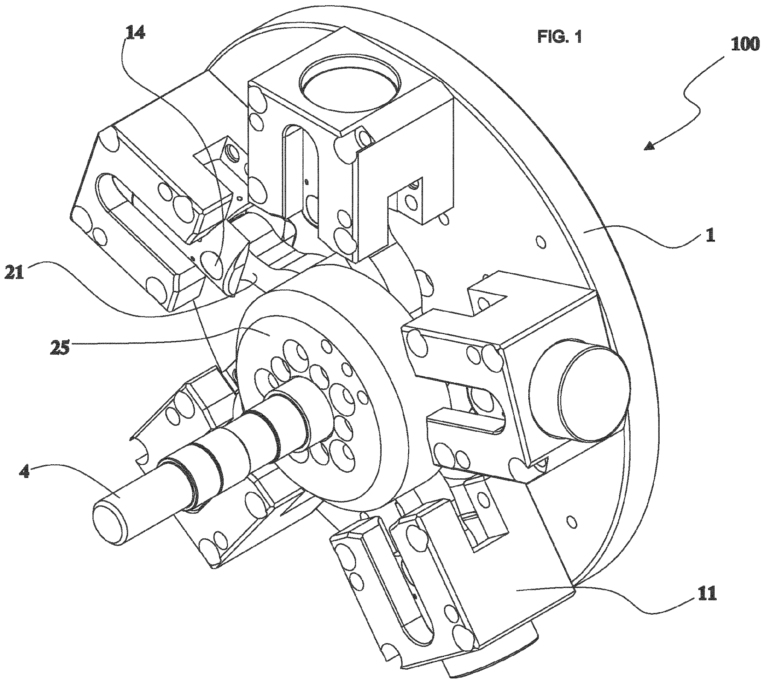

With particular reference to Fig. 1, a rotating apparatus 100 according to the present invention is depicted.

Said rotating apparatus 100 comprises a disc 1 which is susceptible to be motorized, and a driven disc 2 configured to be placed in rotation by the motorized disc 1.

Said motorized disc 1 is, in turn, placed in rotation by a motor not represented in the figure.

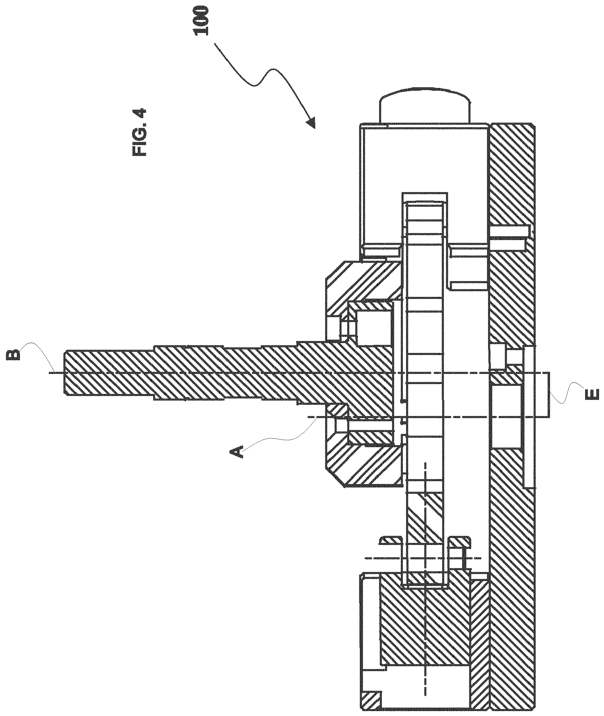

The axis of rotation A of the motorized disc 1 and the axis of rotation B of the driven disc 2 are parallel to each other, but spaced apart by a value that will be referred to as the eccentricity E of the device 100 as pointed out in Fig. 4.

The motor 3 in a preferred embodiment is an asynchronous electric motor. Any variations, such as a brushless motor or a hydraulic motor, etc., as well as any gearmotors, are to be considered as falling within the protection scope of the invention.

An output shaft 4 coaxial to the axis of rotation B and having the same angular velocity of the driven disc 2 is mechanically associated to the driven disc 2.

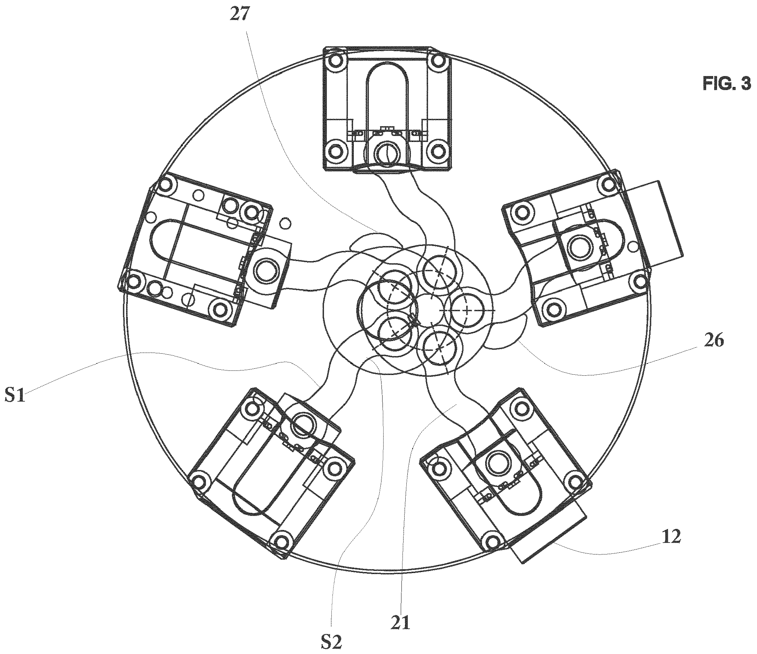

In accordance with a formulation of the present invention, as represented in the figures 1, 2, and 3, the motorized disc 1 comprises at least 5 guides 11 that act as a guide for the sliding of a skid 12.

Said guides 11 are arranged each along a radius of the motorized disc 1 and at constant pitch from each other. In the represented case, the motorized disc comprises 5 guides 11 that are therefore spaced by 72° from each other.

In accordance with possible embodiments, the guides 11 are configured so as to receive a cylindrical-shaped skid 12, i.e., a piston.

A connecting rod 21 is operationally associated to each skid 12; an end of the connecting rod 21, referred to as the connecting rod foot 22, is connected to the skid 12, by a hinge 14 that allows the rotation of said connecting rod 21 according to an axis parallel to the above-mentioned axes A and B.

The other end of the connecting rod 21, referred to as the connecting rod head 23, is connected to the driven disc 2 and free to rotate about a fulcrum 24 having its axis parallel to the axes A and B.

The fulcrums 24 of all the connecting rods 21 are arranged on a circumference having center on the axis of rotation B of the driven disc 2.

Each connecting rod 21 is preferably S-shaped, i.e., bearing two opposite bends S1 and S2.

In a preferred embodiment, the length of the connecting rod 21, i.e. the distance between the axis of the hinge 14 and the axis of the fulcrum 24, is equal to twice the value of the eccentricity E multiplied by the golden number, here approximated to the value 1.618.

In accordance with possible embodiments, the driven disc 2 comprises two phaser teeth 26 and 27 arranged on a circumference having center on the axis of rotation B of the driven disc 2.

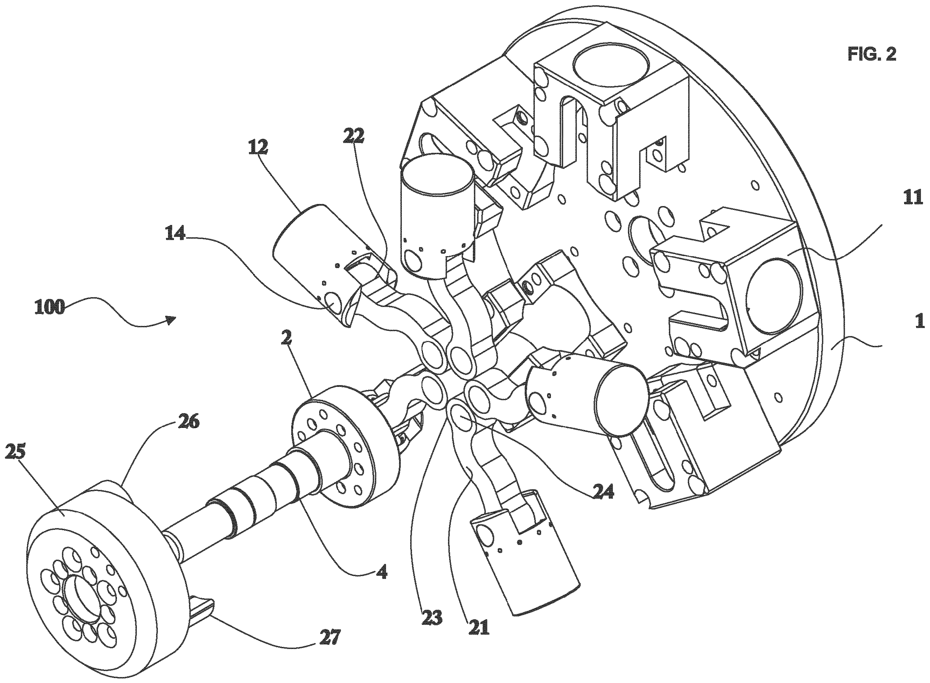

The phaser teeth 26 and 27 can be directly obtained from or mounted on the driven disc 2, or, in a preferred embodiment pointed out in Fig. 2, they can be integral to a flange 25 mechanically associated, by a plurality of bolts, to the driven disc 2.

As a function of the rotation direction of the device 100, which, in the case represented in the figures, is counter-clockwise, each of said phaser teeth 26 and 27 is configured so as to lean against the profile of the connecting rod 21 that precedes it, and not to interfere with the profile of the connecting rod 21 that follows it.

In particular, in accordance with an aspect of the invention the two phaser teeth 26 and 27 are arranged at an angular distance from each other of 144°, or 216° when looking at the complementary angle, so that there is always only one phaser tooth 26 or 27 in contact with the corresponding connecting rod 21 that precedes it. At an exact exchange point, the phaser tooth 26 or 27 that was in contact with the connecting rod 21 detaches, while the other phaser tooth 26 or 27 that was not in contact, comes into contact with the corresponding connecting rod 21 that precedes it.

A horizontal axis O passing through the center of the motorized disc 1, as represented in figure 4, is defined, and the degrees covered during the counter-clockwise rotation of the rotating apparatus 100 are counted from said axis O.

The phaser tooth 26 comes into contact with the connecting rod 21 that precedes it, when the sliding axis of the corresponding skid 12 is at 18° from the axis O; in the same moment, the phaser tooth 27 detaches from the connecting rod 21 that precedes it and the sliding axis of the corresponding skid 12 is at 162° from the axis O.

The phaser tooth 26 remains in contact with the connecting rod 21 that precedes it for an angle equal to 180°, during which the phaser tooth 27 remains detached from the corresponding connecting rod 21 that precedes it.

The phaser tooth 26 detaches from the connecting rod 21 that precedes it when the sliding axis of the corresponding skid 12 gets to the position of 198° from the axis O, while the phaser tooth 27 comes into contact with the connecting rod 21 that precedes it, when the sliding axis of the corresponding skid 12 gets to the position of 342° from the axis O.

In essence, when the phaser tooth 26 is in contact with the corresponding connecting rod 21 that precedes it, the phaser tooth 27 is detached from the corresponding connecting rod 21 that precedes it and vice versa. Furthermore, the phaser teeth 26 and 27 remain in contact with the connecting rod 21 that precedes them for an angle equal to 180°.

The phaser teeth 26 and 27 act as phasers, i.e., they prevent an excessive offset between the motorized disc 1 and the driven disc 2.

When the device 100 is placed in rotation by the motor 3, on each skid 12 and on each connecting rod 21 centrifugal forces are generated that, as it is known, do not depend on the applied power, but on the mass, the square of the peripheral velocity and the radius of action.

The centrifugal forces acting on the five connecting rods 21 will be radial with respect to the axis of rotation B and will pass through the barycenter of said connecting rods 21 and skids 12.

The eccentricity E between the two axes of rotation A and B, the configuration and the assembly of the connecting rods 21 allow decomposing the centrifugal force into two components, one of which being a component Fa (not shown in the figure). The vector of the force Fa defines a torque that depends on the distance of the barycenter of the connecting rods 21 from the center of rotation of the driven disc 2, i.e., the arm on which the component Fa of the centrifugal force acts.

Said arm changes as a function of the different positions that the connecting rods 21 take during the rotation.

The components Fa of all the connecting rods 21 add up, converting part of the centrifugal force into torque. Each component Fa will be different as a function of the position taken by the relative connecting rod 21.

During the operation of the rotating device 100 two working conditions may take place:
1. a load is applied to the output shaft 4, which requires a lower torque than that provided by the motor 3.
2. a load is applied to the output shaft 4, which requires a higher torque than that provided by the motor 3;

In the case 1, the torque provided for by the motor 3 is sufficient to put the device 100 in rotation, overcoming frictions and to handle the load applied to the shaft 4.

The orthogonal Fa component generates a torque that in this case will be not absorbed by the load applied to the output shaft 4, but that will generate an acceleration of the driven disc 2 that will lead to an increased rate thereof.

The presence of the phaser teeth 26 and 27 will lead also the motorized disc 1 to conform to this new rate; this will be made more possible by virtue of the presence of a low-power motor 3 that is not able to oppose this increase of the rate.

In the case 2, the applied load exerts a braking action on the driven disc 2, so that the phaser tooth 26 or 27, which in that moment is in contact with the connecting rod 21 that precedes it, detaches therefrom.

Accordingly, both the phaser teeth 26 and 27 are detached from the connecting rods 21; furthermore, all the connecting rod heads 23, the fulcrums of rotation 24 of which are integral to the driven disc 2, remain rearward with respect to the connecting rod feet 22 that rotate integral to the skids 12, thus to the motorized disc 1.

In such a case, when an offset between the two discs, the motorized disc 1 and the driven disc 2, is generated, the component Fa, generates a torque that in this case will be absorbed by the load applied to the output shaft 4.

When at least one phaser tooth 26 or 27 is in contact with the connecting rod 21 that precedes it, it is pointed out that the resulting torque due to the components Fa of the centrifugal forces is null, while when both the phaser teeth 26 and 27 are detached from the connecting rod 21 that precedes them, the resulting torque is not null.

In the description, specific reference has been made to a rotating apparatus 100 with five guides 11, five skids 12 and five connecting rods 21, but of course the number of said components can be different from the one described, without however departing from the protection scope of the claims set forth herein below.

The connecting rods 21 and the phaser teeth 26 and 27 depicted in Fig. 1 are configured and mounted so as to allow a counter-clockwise rotation of the rotating apparatus 100.

The version where the connecting rods 21 and the phaser teeth 26 and 27 are configured and mounted specularly with respect to fig. 1, so as to allow a clockwise rotation of the rotating apparatus 100 is also considered as falling within the protection scope of the invention.

However, it is intended that what has been described above is of a non-limiting, exemplary value; therefore, any detail variations that would be necessary due to technical and/or functional reasons are as of now considered to fall within the same protecting scope defined by the claims set forth herein below.

## Claims

1. Rotating apparatus (100) comprising a motorized disc (1) adapted to be placed in rotation by a motor and a driven disc (2) adapted to be placed in rotation by the motorized disc (1), **characterized in that** the driven disc (2) comprises a plurality of connecting rods (21) rotatably connected to said driven disc (2) in eccentric position with respect to the axis (B) of an output shaft (4) of the driven disc (2) where each connecting rod (21) is operationally associated to a skid (12) sliding along a corresponding guide (11), where said guides (11) are integral in rotation with the motorized disc (1) and arranged radially at constant pitch from each other.

2. Rotating apparatus (100) according to claim 1, wherein the motorized disc (1) rotates about an axis of rotation (A) and the driven disc (2) rotates about the axis of rotation (B) where said axes (A) and (B) are parallel to each other, but spaced apart by an eccentricity value (E).

3. Rotating apparatus (100) according to claim 1, wherein the guides (11), the skids (12) and the connecting rods (21) are in a number equal to five.

4. Rotating apparatus (100) according to one of the preceding claims, wherein each connecting rod (21) comprises a connecting rod foot (22) and a connecting rod head (23), where the connecting rod foot (22) is connected to the skid (12) by a hinge (14), while the connecting rod head (23) is connected to the driven disc (2) by a fulcrum (24).

5. Rotating apparatus (100) according to claim 4, wherein the connecting rod foot (22) is free to rotate around the hinge (14) according to an axis parallel to the axes (A) and (B) and the connecting rod head (23) is free to rotate around the fulcrum (24) according to an axis parallel to the axes (A) and (B).

6. Rotating apparatus (100) according to one of claims 4 or 5, wherein the fulcrums (24) of all the connecting rods (21) are arranged on a circumference having center on the axis of rotation (B).

7. Rotating apparatus (100) according to one of the preceding claims, wherein the driven disc (2) comprises two phaser teeth (26) and (27) arranged on a circumference having center on the axis of rotation (B); said phaser teeth (26) and (27) are shaped so as to lean on the profile of the connecting rod (21) that precedes it and not interfere with the profile of the connecting rod (21) that follows it.

8. Rotating apparatus (100) according to claim 7, wherein the two phaser teeth (26) and (27) are placed at an angular distance of 144° from each other.

9. Rotating apparatus (100) according to claim 7 or 8, wherein when the phaser tooth (26) is in contact with the corresponding connecting rod (21) that precedes it, the phaser tooth (27) is detached from the corresponding connecting rod (21) that precedes it and vice versa.

10. Rotating apparatus (100) according to one of claims 7 to 9, wherein the phaser teeth (26) and (27) remain in contact with the connecting rod (21) that precedes them, by an arc of rotation of 180°.

11. Rotating apparatus (100) according to one of the preceding claims, wherein the connecting rods (21) are S-shaped bearing two opposite bends (S1) and (S2).

12. Rotating apparatus (100) according to one of the preceding claims, wherein the length of the connecting rods (21) i.e. the distance between the axis of the hinges (14) and the axis of the corresponding fulcrum (24) is equal to twice the value of eccentricity (E) multiplied by the golden number.
